# EUROPEAN PATENT APPLICATION

(11) **EP 4 818 858 A1**
(43) Date of publication of application: **07.10.2026**
(21) Application number: 26164607.9
(22) Date of filing: 13.03.2026
(51) Int. Cl.: G06F 3/042, A63B 24/00, G06F 3/00, G06F 3/01

(54) **SENSOR BASED ADAPTIVE TECHNIQUES FOR CALIBRATION OF OBJECTS AND ENABLING TASKS FOR USERS**

(30) Priority: 31.03.2025 IN 202521031641
(71) Applicant: Tata Consultancy Services Limited, Maharashtra (IN)
(72) Inventor: SANTHANAM, Sivakumar Kuppusamy, 600086 Chennai, Tamil Nadu (IN); KUMARA, Likhith Prasanna, 600113 Chennai, Tamil Nadu (IN); SIVAN, Vishnu, 695581 Trivandrum, Kerala (IN); PADMANABHAN, Kausik, 600096 Chennai, Tamil Nadu (IN)
(74) Representative: Goddar, Heinz J.

(57) **Abstract**

With growing digitization, lifestyle has become sedentary for many citizens. This sedentary behaviour has proven to be dangerous to humans, leading to obesity, cancer, psychological disorders, etc. Hence, organizations and government entities/institutions are promoting an active life cycle. However, it is not easy. Use of mobile applications could be an easy approach to start with, but mobile devices worsen the sedentary behaviour. Gamification is a technique by which intended objectives or tasks performed by users are met through games. Present disclosure provides a system and method that implement sensor boards at different locations in an environment for enabling tasks to be performed by users based on calibrated objects in the environment. Calories burnt by the users are computed based on tasks performed and are compared with the target calories to be burnt. Based on the comparison, the speed of the calibrated objects and an associated difficulty level are adjusted.

## Description

### CROSS-REFERENCE TO RELATED APPLICATIONS AND PRIORITY

The present application claims priority from Indian application no. 202521031641, filed on March 31, 2025.

### TECHNICAL FIELD

The disclosure herein generally relates to health analytics, and, more particularly, to sensor based adaptive techniques for calibration of objects and enabling tasks for users.

### BACKGROUND

With growing digitization, lifestyle has become sedentary for many citizens. Fast food delivery apps, grocery applications, online ecommerce services, 24*7 news channels, streaming media services made people into non-mobile assets. This sedentary behaviour has proven to be dangerous to humans as it may lead to obesity, cancer, psychological disorders, and so on. Hence, many organizations and government entities/institutions have initiated processes to promote an active life cycle. However, it is not easy. Use of mobile applications could be an easy approach to start with, but mobile devices worsen the sedentary behaviour. For instance, gamification is a technique by which intended objectives or tasks to be performed by users are met through games.

### SUMMARY

Embodiments of the present disclosure present technological improvements as solutions to one or more of the above-mentioned technical problems recognized by the inventors in conventional systems.

For example, in one aspect, there is provided a processor implemented method implementing sensor based adaptive techniques for calibration of objects and enabling tasks for users. The method comprises receiving, via one or more hardware processors, an input data pertaining to a user, wherein the input data comprises a weight, a height, an age and demographic data of the user; computing, via the one or more hardware processors, an optimal gaze angle, a current position of eyes of the user, a reaction speed of the eyes of the user, and a reaction speed of one or more hand movements based on one or more indicators displayed on one or more sensor boards positioned and configured in an environment; computing, via the one or more hardware processors, a target calorie to be burnt by the user based on the weight, the height, the age and the demographic data; calibrating, via the one or more hardware processors, the one or more objects for movements at a specific speed based on the optimal gaze angle, the current position of the eyes of the user, the reaction speed of the eyes of the user and the reaction speed of the one or more hand movements, and aligning the one or more calibrated objects with a defined goal; computing, via the one or more hardware processors, a set of joint angle movements performed by the user for reaching the defined goal, by using an approximated inverse kinematics technique; computing, via the one or more hardware processors, a set of tasks performed by the user based on a torque at each joint and joint angle movement amongst the first set of joint angle movements; computing, via the one or more hardware processors, a set of rate of change of the set of tasks based on a Euclidean distance (the shortest distance between the user and the sensor boards) between (i) movement of the user between the one or more sensor boards and (ii) a time taken for change in a status associated with the user; computing, via the one or more hardware processors, a frequency of change in the set of tasks performed by the user based on a number of tasks changed and time of one or more observations associated therein; computing, via the one or more hardware processors, a set of metabolic equivalent of tasks based on the frequency of change in the set of tasks performed by the user; computing, via the one or more hardware processors, a set of calories burnt by the user based on the first set of metabolic equivalent of tasks; performing, via the one or more hardware processors, a comparison of the set of calories and the target calorie; and adjusting, via the one or more hardware processors, speed of the one or more calibrated objects based on the comparison.

In an embodiment, the method further comprises obtaining a baseline of an eye movement of the user by prompting the user to observe a pattern change of the one or more indicators associated on the one or more sensor boards; computing, using the baseline of the eye movement of the user, an error rate based on (i) a number of incorrect movements performed by the user to reach the one or more sensor boards and (ii) a number of correct movements performed by the user to reach the one or more sensor boards; and computing a current difficulty based on a previous difficulty and the error rate.

In an embodiment, a message is transmitted to the one or more sensor boards for (i) a change in the one or more indicators and (ii) an observation to be made by the user for selection based on a prompt technique.

In an embodiment, the method further comprises computing a pattern change in the one or more indicators based on the baseline of the eye movement of the user.

In an embodiment, the method further comprises computing a subsequent set of tasks to be performed by the user for adjustment of the speed of the one or more calibrated objects.

In another aspect, there is provided a processor implemented system for implementing sensor based adaptive techniques for calibration of objects and enabling tasks for users. The system comprises: a memory storing instructions; one or more communication interfaces; and one or more hardware processors coupled to the memory via the one or more communication interfaces, wherein the one or more hardware processors are configured by the instructions to receive an input data pertaining to a user, wherein the input data comprises a weight, a height, an age and demographic data of the user; compute an optimal gaze angle, a current position of eyes of the user, a reaction speed of the eyes of the user, and a reaction speed of one or more hand movements based on one or more indicators displayed on one or more sensor boards positioned and configured in an environment; compute a target calorie to be burnt by the user based on the weight, the height, the age and the demographic data; calibrate the one or more objects for movements at a specific speed based on the optimal gaze angle, the current position of the eyes of the user, the reaction speed of the eyes of the user and the reaction speed of the one or more hand movements, and align the one or more calibrated objects with a defined goal; compute a set of joint angle movements performed by the user for reaching the defined goal, by using an approximated inverse kinematics technique; compute a set of tasks performed by the user based on a torque at each joint and joint angle movement amongst the first set of joint angle movements; compute a set of rate of change of the set of tasks based on a Euclidean distance between (i) movement of the user between the one or more sensor boards and (ii) a time taken for change in a status associated with the user; compute a frequency of change in the set of tasks performed by the user based on a number of tasks changed and time of one or more observations associated therein; compute a set of metabolic equivalent of tasks based on the frequency of change in the set of tasks performed by the user; compute a set of calories burnt by the user based on the first set of metabolic equivalent of tasks; perform a comparison of the set of calories and the target calorie; and adjust speed of the one or more calibrated objects based on the comparison.

In an embodiment, the one or more hardware processors are further configured by the instructions to obtain a baseline of an eye movement of the user by prompting the user to observe a pattern change of the one or more indicators associated on the one or more sensor boards; compute, using the baseline of the eye movement of the user, an error rate based on (i) a number of incorrect movements performed by the user to reach the one or more sensor boards and (ii) a number of correct movements performed by the user to reach the one or more sensor boards; and compute a current difficulty based on a previous difficulty and the error rate.

In an embodiment, a message is transmitted to the one or more sensor boards for (i) a change in the one or more indicators and (ii) an observation to be made by the user for selection based on a prompt technique.

In an embodiment, the one or more hardware processors are further configured by the instructions to compute a pattern change in the one or more indicators based on the baseline of the eye movement of the user.

In an embodiment, the one or more hardware processors are further configured by the instructions to compute a subsequent set of tasks to be performed by the user for adjustment of the speed of the one or more calibrated objects.

In yet another aspect, there are provided one or more non-transitory machine-readable information storage mediums comprising one or more instructions which when executed by one or more hardware processors cause implementing sensor based adaptive techniques for calibration of objects and enabling tasks for users by receiving an input data pertaining to a user, wherein the input data comprises a weight, a height, an age and demographic data of the user; computing an optimal gaze angle, a current position of eyes of the user, a reaction speed of the eyes of the user, and a reaction speed of one or more hand movements based on one or more indicators displayed on one or more sensor boards positioned and configured in an environment; computing a target calorie to be burnt by the user based on the weight, the height, the age and the demographic data; calibrating the one or more objects for movements at a specific speed based on the optimal gaze angle, the current position of the eyes of the user, the reaction speed of the eyes of the user and the reaction speed of the one or more hand movements, and aligning the one or more calibrated objects with a defined goal; computing a set of joint angle movements performed by the user for reaching the defined goal, by using an approximated inverse kinematics technique; computing a set of tasks performed by the user based on a torque at each joint and joint angle movement amongst the first set of joint angle movements; computing a set of rate of change of the set of tasks based on a Euclidean distance between (i) movement of the user between the one or more sensor boards and (ii) a time taken for change in a status associated with the user; computing a frequency of change in the set of tasks performed by the user based on a number of tasks changed and time of one or more observations associated therein; computing a set of metabolic equivalent of tasks based on the frequency of change in the set of tasks performed by the user; computing a set of calories burnt by the user based on the first set of metabolic equivalent of tasks; performing a comparison of the set of calories and the target calorie; and adjusting speed of the one or more calibrated objects based on the comparison.

In an embodiment, the one or more instructions which when executed by the one or more hardware processors further cause obtaining a baseline of an eye movement of the user by prompting the user to observe a pattern change of the one or more indicators associated on the one or more sensor boards; computing, using the baseline of the eye movement of the user, an error rate based on (i) a number of incorrect movements performed by the user to reach the one or more sensor boards and (ii) a number of correct movements performed by the user to reach the one or more sensor boards; and computing a current difficulty based on a previous difficulty and the error rate.

In an embodiment, a message is transmitted to the one or more sensor boards for (i) a change in the one or more indicators and (ii) an observation to be made by the user for selection based on a prompt technique.

In an embodiment, the one or more instructions which when executed by the one or more hardware processors further cause computing a pattern change in the one or more indicators based on the baseline of the eye movement of the user.

In an embodiment, the one or more instructions which when executed by the one or more hardware processors further cause computing a subsequent set of tasks to be performed by the user for adjustment of the speed of the one or more calibrated objects.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for implementing sensor based adaptive techniques for calibration of objects and enabling tasks for users, in accordance with an embodiment of the present disclosure.
FIG. 2 depicts an exemplary flow chart illustrating a method for implementing sensor based adaptive techniques for calibration of objects and enabling tasks for users, using the system of FIG. 1, in accordance with an embodiment of the present disclosure.

It should be appreciated by those skilled in the art that any block diagrams herein represent conceptual views of illustrative systems and devices embodying the principles of the present subject matter and shall not be construed as exhaustive or as limiting the scope of the claimed invention. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

With growing digitization, lifestyle has become sedentary for many citizens. This sedentary behaviour has proven to be dangerous to humans further, leading to obesity, cancer, psychological disorders, etc. Hence, organizations and government entities/institutions are promoting an active life cycle of their associates. However, it is not easy. Use of mobile applications could be an easy approach to start with, but mobile devices worsen the sedentary behaviour. Gamification is a technique by which intended objectives or tasks performed by users are met through games.

Present disclosure provides a system and a method that implement various sensors boards to enable tasks to be performed by users. By using sensors on board, the system attains two major advantages a) It makes easy for the user, as he/she need not wear any additional device on their body, and b) implementing sensor onboard, makes it possible to use the device by multiple users without spending lot of time and further eliminates the cost associated with such sensors and its implementation on individual users. Imagine removing and adding sensors to every person entering the gym or physiotherapy centre which shall be tedious process and sometimes economically not feasible. The system 100 computes number of calories to be burnt by the user based on his body mass and height. Tasks may include physical activity in the form of physical movements such move backward/forward, jump up, collect the objects on the floor, shoot, catch and throw the objects that are captured by the different sensors installed at various places (e.g., sensor boards). For instance, to complete a walk, user may have to touch two different sensor boards, to collect coins user may touch sensor boards positioned on the floor, and so on. Objects are calibrated in the environment where the sensor boards are positioned and connected to the system and are synchronized with the user actions. Based on the user actions, scenes/scenarios in the environment are incremented, or users may be asked to perform the same task again. Time taken for each activity/task performed by the users is obtained using details captured through the sensor boards. For each successful completion of the task performed (e.g., physical activity, and the like), the system 100 assigns a score to the users. The score is calculated based on one or more options available on sensor boards (e.g., positions of touch/haptic feedback, buttons, and so on present/available on the sensor boards). If the position of these options is at bottom, more effort is needed by the user to perform any action on such options (e.g., touch), thus making it as 1.5x time rewarding and position of the option in top makes 1x time rewarding. The default score for any action is 'a' value (e.g., a=10, and such scoring shall not be construed as limiting the scope of the present disclosure) and it is multiplied with weight as mentioned above. Based on information retrieved through the sensor boards (e.g., task performed, task status, time taken, and so on), the system 100 computes the calorie burnt by the user, the calorie burnt by the user are compared with the threshold/target calorie needs to be burnt. If, user achieves the target/threshold calories to be burnt, then the system 100 may either terminate the process or adjust the current level of task performed. decreases or increase the difficulty level of the current task.

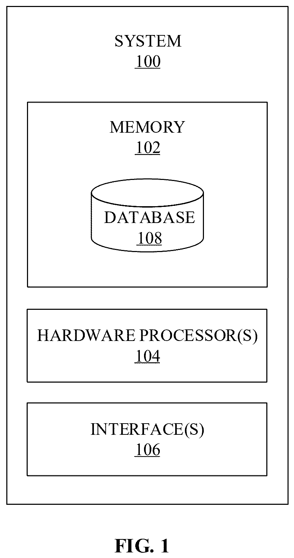

Referring now to the drawings, and more particularly to FIGS. 1 through 2, where similar reference characters denote corresponding features consistently throughout the figures, there are shown preferred embodiments, and these embodiments are described in the context of the following exemplary system and/or method.

FIG. 1 depicts an exemplary system 100 for implementing sensor based adaptive techniques for calibration of objects and enabling tasks for users, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, smart watches, smart rings, activity trackers, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to the user. For instance, the database stores a weight, a height, an age and demographic data of various users. The database 108 further comprises information pertaining to one or more sensor boards positioned and configured in an environment, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

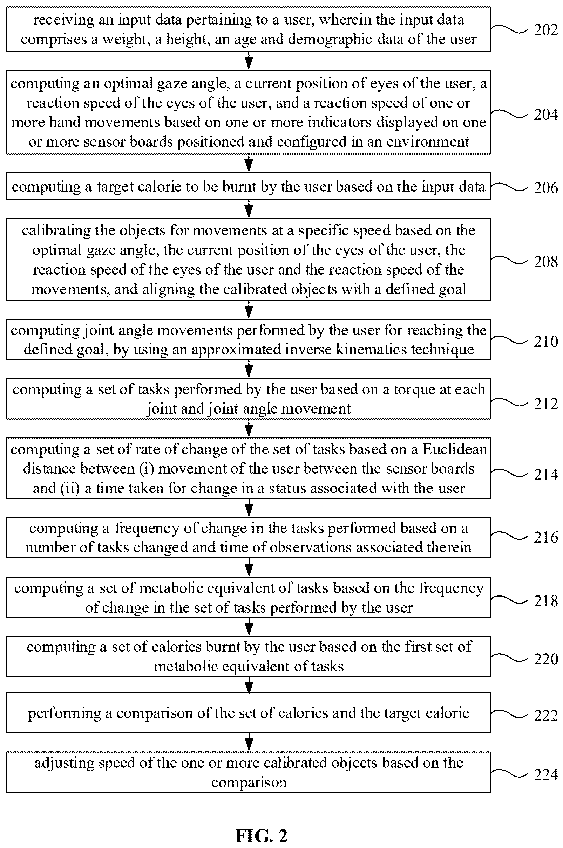

FIG. 2, with reference to FIG. 1, depicts an exemplary flow chart illustrating a method for implementing sensors based adaptive techniques for calibration of objects and enabling tasks for users, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically feasible. Further, some steps may be performed simultaneously.

At step 202 of the method of the present disclosure, the one or more hardware processors 104 receive an input data pertaining to a user. The input data comprises a weight, a height, an age and demographic data of the user. For instance, weight, age, height, gender, daily work level, distance between sensor boards and seat, distance between a main board and secondary boards, and so on are received as inputs from the user. In the present disclosure, say weight - 80 kg, Height - 1.75 m, Age - 30, Gender - Male, and other details include but limited to for example, little to no exercise. Other information that is received as part of the input may comprise but is not limited to the distance between board to seat (55 m) and distance between primary board and secondary board (60 m) (constant for all secondary boards).

At step 204 of the method of the present disclosure, the one or more hardware processors 104 compute an optimal gaze angle, a current position of eyes of the user, a reaction speed of the eyes of the user, and a reaction speed of one or more hand movements based on one or more indicators displayed on one or more sensor boards positioned and configured in an environment. It is to be understood by a person having ordinary skill in the art or person skilled in the art that the sensor boards positioning in the environment is not depicted in FIGS, however such depiction can be realized in practice and in real-world environment and this shall not be construed as limiting the scope of the present disclosure. As mentioned above, one or more various options can be made available on sensor boards (e.g., touch/haptic feedback, buttons, and so on present/available on the sensor boards). Such options shall not be construed as limiting the scope of the present disclosure. If the position of these options is at bottom, more effort is needed by the user to perform any action on such options (e.g., touch), thus making it as 1.5x time rewarding and position of the option in top makes 1x time rewarding. The default score for any action is 'a' value (e.g., a=10, and such scoring shall not be construed as limiting the scope of the present disclosure) and it is multiplied with weight as mentioned above.

At step 206 of the method of the present disclosure, the one or more hardware processors 104 compute a target calorie to be burnt by the user based on the weight, the height, the age and the demographic data.

At step 208 of the method of the present disclosure, the one or more hardware processors 104 calibrate the one or more objects for movements at a specific speed based on the optimal gaze angle, the current position of the eyes of the user, the reaction speed of the eyes of the user and the reaction speed of the one or more hand movements, and align the one or more calibrated objects with a defined goal.

The steps 204 and 206 are better understood by way of following description. Initially, Basal Metabolic Rate (BMR) is calculated which is expressed by way of the following:
i. If Gender is Male: BMR = (9.65 × weight in kg) + (573 × height in m) - (5.08 × age in years) + 260
ii. If Gender is Female: - BMR = (7.38 × weight in kg) + (607 × height in m) - (2.31 × age in years) + 43

Following the BMR calculation, the total target calories to be burnt by the user based on the weight, the height, the age and the demographic data is computed by way of the following:

Point allocation based on work level: -
1. If Work Level is no exercise: Points = 1.2
2. If Work Level is light exercise for 1-3 days: Points = 1.37
3. If Work Level is moderate exercise 3-5 days: Points = 1.55
4. If Work Level is hard exercise 6-7 days: Points = 1.725
5. If Work Level is physically demand: Points = 1.9

Calories to be burned per day: Target calorie to be burnt = BMR*Points

Initial calibration of sensor boards and objects and one or more indicators (e.g., pattern or alternatively color levels).
1. Based on the previous data from users input the distance between the sensor boards and seat and the distance between the main board and secondary boards, the system 100 initiates a random change of the indicators as a set (e.g., sensor board number, an associated cell number, a pattern of the indicator (e.g., color)), and so on.
2. The user then confirms if he/she can see the pattern of the indicator or not using the sensor board.
3. Now once the indicator tuning is done, the system 100 increases the speed to determine the maximum capability of the user (which in this scenario is referred to as calibration of objects basis observations done on the user).
4. The above steps are run in a loop to find the optimal value of the following parameters.
   a. Optimal Gaze angle, $θ = {tan}^{- 1} \frac{\left(Board position\right) - \left(User position\right)}{Focal length}$
   b. Current position of the eyes, *G*_{〈*x*|*y*|*z*〉} = (tan *θ * Focal length*) *+* (*Board postion*)_{〈*x*|*y*|*z*〉}
   c. Reaction speed for eye, ${V}_{eye} = \frac{\left(Current position of Eye\right) - \left(Earlier positon of Eye\right)}{time taken for change in input}$
   d. Reaction speed for Hand movement, ${V}_{hand} = \frac{\left(Current position of hand\right) - \left(Earlier positon of hand\right)}{time taken for change in input}$

Here focal length is the focal length of normal human eye which is 2 cm.

The optimal value of reaction speed for eye is taken as the baseline for eye movement and hand movement.

The above steps 204 through 208 are better understood by way of examples:
1. It is assumed that there is an input indicator (e.g., say a pattern or a color such as red at sensor board number 1 and in the associated cell number 2.
2. The distance between sensor board and the user is obtained initially and the optimal values are computed empirically. The optimal value(s) are obtained through the above-mentioned calculations, and it varies with different users/persons and different room/environment configuration. The above method is executed in iteration(s) and the average of those values are taken.
3. The following parameters are calculated.
   a. Optimal Gaze angle, $θ = {tan}^{- 1} \left(\frac{60 - 55}{2}\right) = {68.19}^{0}$
   b. Current eye position,G, = (tan 68.19 * 2) + 60 = 65
   c. Reaction speed of the eye, ${V}_{eye} = \frac{\left(65\right) - \left(0\right)}{2} = 32.5 m / s$
   d. Reaction speed of the Hand Movement, ${V}_{hand} = \frac{\left(8, 0\right) - \left(0, 0\right)}{2} = 4 m / s$
Thus, the optimal reaction speed for the following persona is set as the above.

Referring to the steps of FIG. 2, at step 210 of the method of the present disclosure, the one or more hardware processors 104 compute a set of joint angle movements performed by the user for reaching the defined goal, by using an approximated inverse kinematics technique. The goal includes but is not limited to, perform all the tasks by the users and meet the target calories and attain the current level for enabling the system to adjust the current level of difficulty to a next level of difficulty, in one embodiment of the present disclosure, and such goal shall not be construed as limiting the scope of the present disclosure. The system 100 considers the human arm to be a 2-link manipulator to ease the computation load. Based on the Kinematic equation, for a given joint angle (elbow angle and shoulder angle) the system 100 observes a possible position of the palm of the hand. The equation obtained at this step by the system 100 is called forward kinematics. The problem that is observed is the position of the palm of the hand is known, so the equations are to be inversed to give out the possible joint angle (elbow angle and shoulder angle - these equations are provided below). At step 212 of the method of the present disclosure, the one or more hardware processors 104 compute a set of tasks performed by the user based on a torque at each joint and joint angle movement amongst the first set of joint angle movements. At step 214 of the method of the present disclosure, the one or more hardware processors 104 compute a set of rate of change of the set of tasks based on a Euclidean distance between (i) movement of the user between the one or more sensor boards and (ii) a time taken for change in a status associated with the user. At step 216 of the method of the present disclosure, the one or more hardware processors 104 compute a frequency of change in the set of tasks performed by the user based on a number of tasks changed and time of one or more observations associated therein. At step 218 of the method of the present disclosure, the one or more hardware processors 104 compute a set of metabolic equivalent of tasks based on the frequency of change in the set of tasks performed by the user. At step 220 of the method of the present disclosure, the one or more hardware processors 104 compute a set of calories burnt by the user based on the first set of metabolic equivalent of tasks. At step 222 of the method of the present disclosure, the one or more hardware processors 104 perform a comparison of the set of calories and the target calorie. At step 224 of the method of the present disclosure, the one or more hardware processors 104 adjust the speed of the one or more calibrated objects based on the comparison.

The steps 210 through 224 are better understood by way of the following description:

The distance between each grid on the WAIT board/sensor board is known based on which the Euclidean distance between each grid is calculated (a Euclidean distance between (i) movement of the user between the one or more sensor boards and (ii) a time taken for change in a status associated with the user).
From the system the time taken for input change is calculated.
Using the above inputs, the rate of change of input V in wait board/sensor board is calculated. $V = \frac{Euclidean distance between the Grid moved}{Time taken for change}$ The frequency of change in the set of tasks performed by the user is calculated using $f = \frac{No . of inputs changed}{time of observation}$ Now based on the position, a target value of joint movement and force exerted are obtained. Joint Angle prediction: Here, L2 is length from elbow to wrist and L1 is length from shoulder to elbow
1. Elbow Angle, ${θ}_{2} = arccos \left(\frac{{x}_{target}^{2} + {y}_{target}^{2} - {l}_{1}^{2} - {l}_{2}^{2}}{2 ⋅ {l}_{1} ⋅ {l}_{2}}\right)$
2. Sholder Angle, ${θ}_{1} = arctan \left(\frac{{y}_{target}}{{x}_{target}}\right) - arctan \left(\frac{{l}_{2} ⋅ sin \left({θ}_{2}\right)}{{l}_{1} + {l}_{2} ⋅ cos \left({θ}_{2}\right)}\right)$
3. Torque at each joint, τ*ᵢ = Fᵢ* × *rᵢ*
*Work Done:* Work performed by the user (e.g., also referred to as task performed by the user), $Work = {\int }_{{t}_{i}}^{{t}_{f}} τ \left(t\right) θ \left(t\right) dt$

Using the above, the calories spent/burnt by the user is calculated by way of the following expression. $\begin{matrix}Calories burned \\ = \left(MET\times Weight\left(kg\right)\times time\left(hours\right)\right) \\ + \frac{Work}{Energy conversion Factor}\end{matrix}$

Until the target calories to be burnt are met by the user, the user is asked to perform the tasks and accordingly various objects in the environment are calibrated and the level of difficulty is changed (e.g., difficulty level such as low, intermediate, medium, high, advanced, and so on). MET is abbreviated as Metabolic Equivalent Task. It is an objective measure to state the ratio of the energy spent by a unit mass. The value of MET changes based on the activity/task the user is going to perform like, bending, running, etc. Work/Task is defined as the work/task/activity done by the user for the change of input with respect to the motion performed to do so. The energy conversion factor is a term which helps the system 100 to convert the work done by user into energy. The energy conversion factor can be used to convert to any generic unit required.

The system 100 then utilizes the baseline value which is obtained in step 202. In an embodiment, the one or more hardware processors 104 are further configured by the instructions to obtain a baseline of an eye movement of the user by prompting the user to observe a pattern change of the one or more indicators associated on the one or more sensor boards; compute, using the baseline of the eye movement of the user, an error rate based on (i) a number of incorrect movements performed by the user to reach the one or more sensor boards and (ii) a number of correct movements performed by the user to reach the one or more sensor boards; and compute a current difficulty based on a previous difficulty and the error rate.

A signal is sent to secondary boards to excite at random speed and change of indicators (or patterns in the indicators - say a change in color), within the limits which have been obtained by step 202. In other words, the system 100 transmits a message to the one or more sensor boards for (i) a change in the one or more indicators and (ii) an observation to be made by the user for selection based on a prompt technique.

Based on the difficulty level the speed of the calibrated objects is adjusted. Further, based on the user input the error rate is obtained, and the difficulty level is adjusted as follows. In other words, the speed of the one or more calibrated objects are adjusted based on the comparison of the set of calories and the target calories. The error rate obtained from the comparison is indicative of the difference between the input movement (e.g., task performed by the user) to the correct movement (e.g., an actual task to be performed by the user). In an embodiment, the one or more hardware processors 104 are further configured by the instructions to compute a pattern change in the one or more indicators based on the baseline of the eye movement of the user. ${E}_{r} = \frac{Incorrect Movements performed by the user}{Correct Movement performed by the user }$

Thus, the difficulty level adjustment for the current level is adjusted based on previous difficulty and the error rate. $D \left(t\right) = ∝ {D}_{prev} + β \left(1-{E}_{r}\right)$

Indicator speed change (e.g., a patter of the indicator or color change speed adjustment): This is controlled with respect to the difficulty level adjustment made by the system 100. ${F}_{LED} = {F}_{base} \times \left(1+\frac{1}{1 + {e}^{- D \left(t\right)}}\right)$

When the current calories meet the target calories, the task performed by the user is assumed as complete (or a complete status is attained).

The above steps 210 through 222 are better understood by way of the examples mentioned below:

It is assumed that the user moved his input from grid (8,0) to (0,0) as above. The values that would be obtained by the system 100 are as follows,
a. $V = \frac{\sqrt{{\left(8-0\right)}^{2} - {\left(0-0\right)}^{2}}}{2} = 4 m / s$
b. $f = \frac{1}{2} = 0.5 Hz$
c. Inverse kinematics: -
   i. Joint Angle Prediction: -
      1. ${θ}_{2} = arccos \left(\frac{{0.5}^{2} + {0}^{2} - {0.3}^{2} - {0.3}^{2}}{2 ⋅ 0.3 ⋅ 0.3}\right) = {67.11}^{0}$
      2. $\begin{matrix}{θ}_{1} = arctan \left(\frac{0}{0.5}\right) - arctan \left(\frac{0.3 ⋅ sin \left(67.11\right)}{0.3 + 0.3 ⋅ cos \left(67.11\right)}\right) = 0 - \\ 33.55 = - {33.55}^{0}\end{matrix}$
      3. ${τ}_{1} = {F}_{1} \times {r}_{1} = \left(2.5∗9.81\right) ∗ 0.3 = 7.3575 N / m$
      4. 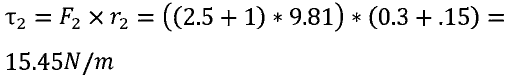 τ2 = F2 × r2 = ((2.5 + 1) * 9.81) * (0.3 + .15) = 15.45N/m
   ii. Task performed by the user (e.g., work done):
      1. Task performed by the user (e.g., work done) = (7.375*67.11) +(15.45*33.55) = 23.411 J
d. $Calories burned = \left(5*80\left(kg\right)*0.55\left(hours\right)\right) + \left(23.411\right) = 243.411$
Calories

Based on the target calories, it is noted that the current calorie burnt is not equal to the target calorie requirement, so the user needs to continue to perform tasks for further details. Hence, the difficulty level may be adjusted. For adjusting the difficulty level, the following steps are performed.

Considering that the user's needs to go from 0,0 to 8,0 instead he navigated to 4,0 and 6,0 then to 8,0.
1. ${E}_{r} = \frac{2}{1} = 2$
2. Difficulty adjustment, initially *D_{Prev}* will be set to 1. α and β are set by the programmer and are initially set at 1 to get direct value.
   a. $D \left(2\right) = 1 + \left(1-2\right) = 0$
   b. ${D}_{Prev} = D \left(2\right) = 0$
3. Now to adjust the indicator (e.g., a pattern or color of a light emitting diode (LED), *F_{base}* is set to 1 by default.
   a. ${F}_{indicator} = 1 ∗ \left(1+\frac{1}{1 + {e}^{- D \left(t\right)}}\right) = 1.5$
Then speed is then adjusted to change speed with 1.5 times the base speed.

Until the target calories to be burnt is met by the user through various tasks, the user is asked to perform the tasks and accordingly various objects in the environment are calibrated and the level of difficulty is changed. As mentioned above, when the current calories meet the requirement target calorie, the task performed by the user is assumed as complete (or a complete status is attained).

In an embodiment, the one or more hardware processors 104 are further configured by the instructions to compute a subsequent set of tasks to be performed by the user for adjustment of the speed of the one or more calibrated objects.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, an input data pertaining to a user (202), wherein the input data comprises a weight, a height, an age and demographic data of the user;
computing, via the one or more hardware processors, an optimal gaze angle, a current position of eyes of the user, a reaction speed of the eyes of the user, and a reaction speed of one or more hand movements based on one or more indicators displayed on one or more sensor boards positioned and configured in an environment (204);
computing, via the one or more hardware processors, a target calorie to be burnt by the user based on the weight, the height, the age and the demographic data (206);
calibrating, via the one or more hardware processors, the one or more objects for movements at a specific speed based on the optimal gaze angle, the current position of the eyes of the user, the reaction speed of the eyes of the user and the reaction speed of the one or more hand movements, and aligning the one or more calibrated objects with a defined goal (208);
computing, via the one or more hardware processors, a set of joint angle movements performed by the user for reaching the defined goal, by using an approximated inverse kinematics technique (210);
computing, via the one or more hardware processors, a set of tasks performed by the user based on a torque at each joint and joint angle movement amongst the first set of joint angle movements (212);
computing, via the one or more hardware processors, a set of rate of change of the set of tasks based on a Euclidean distance between (i) movement of the user between the one or more sensor boards and (ii) a time taken for change in a status associated with the user (214);
computing, via the one or more hardware processors, a frequency of change in the set of tasks performed by the user based on a number of tasks changed and time of one or more observations associated therein (216);
computing, via the one or more hardware processors, a set of metabolic equivalent of tasks based on the frequency of change in the set of tasks performed by the user (218);
computing, via the one or more hardware processors, a set of calories burnt by the user based on the first set of metabolic equivalent of tasks (220);
performing, via the one or more hardware processors, a comparison of the set of calories and the target calorie (222); and
adjusting, via the one or more hardware processors, speed of the one or more calibrated objects based on the comparison (224).

2. The processor implemented method as claimed in claim 1, comprising
obtaining a baseline of an eye movement of the user by prompting the user to observe a pattern change of the one or more indicators associated on the one or more sensors;
computing, using the baseline of the eye movement of the user, an error rate based on (i) a number of incorrect movements performed by the user to reach the one or more sensor boards and (ii) a number of correct movements performed by the user to reach the one or more sensors boards; and
computing a current difficulty based on a previous difficulty and the error rate.

3. The processor implemented method as claimed in claim 2, wherein a message is transmitted to the one or more sensor boards for (i) a change in the one or more indicators and (ii) an observation to be made by the user for selection based on a prompt technique.

4. The processor implemented method as claimed in claim 1, comprising computing a pattern change in the one or more indicators based on the baseline of the eye movement of the user.

5. The processor implemented method as claimed in claim 1, comprising computing a subsequent set of tasks to be performed by the user for adjustment of the speed of the one or more calibrated objects.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive an input data pertaining to a user, wherein the input data comprises a weight, a height, an age and demographic data of the user;
compute an optimal gaze angle, a current position of eyes of the user, a reaction speed of the eyes of the user, and a reaction speed of one or more hand movements based on one or more indicators displayed on one or more sensor boards positioned and configured in an environment;
compute a target calorie to be burnt by the user based on the weight, the height, the age and the demographic data;
calibrate the one or more objects for movements at a specific speed based on the optimal gaze angle, the current position of the eyes of the user, the reaction speed of the eyes of the user and the reaction speed of the one or more hand movements, and align the one or more calibrated objects with a defined goal;
compute a set of joint angle movements performed by the user for reaching the defined goal, by using an approximated inverse kinematics technique;
compute a set of tasks performed by the user based on a torque at each joint and joint angle movement amongst the first set of joint angle movements;
compute a set of rate of change of the set of tasks based on a Euclidean distance between (i) movement of the user between the one or more sensor boards and (ii) a time taken for change in a status associated with the user;
compute a frequency of change in the set of tasks performed by the user based on a number of tasks changed and time of one or more observations associated therein;
compute a set of metabolic equivalent of tasks based on the frequency of change in the set of tasks performed by the user;
compute a set of calories burnt by the user based on the first set of metabolic equivalent of tasks;
perform a comparison of the set of calories and the target calorie; and
adjust speed of the one or more calibrated objects based on the comparison.

7. The system as claimed in claim 6, wherein the one or more hardware processors are further configured by the instructions to:
obtain a baseline of an eye movement of the user by prompting the user to observe a pattern change of the one or more indicators associated on the one or more sensors;
compute, using the baseline of the eye movement of the user, an error rate based on (i) a number of incorrect movements performed by the user to reach the one or more sensor boards and (ii) a number of correct movements performed by the user to reach the one or more sensors boards; and
compute a current difficulty based on a previous difficulty and the error rate.

8. The system as claimed in claim 7, wherein a message is transmitted to the one or more sensor boards for (i) a change in the one or more indicators and (ii) an observation to be made by the user for selection based on a prompt technique.

9. The system as claimed in claim 6, wherein the one or more hardware processors are further configured by the instructions to compute a pattern change in the one or more indicators based on the baseline of the eye movement of the user.

10. The system as claimed in claim 6, wherein the one or more hardware processors are further configured by the instructions to compute a subsequent set of tasks to be performed by the user for adjustment of the speed of the one or more calibrated objects.

11. One or more non-transitory machine-readable information storage mediums comprising one or more instructions which when executed by one or more hardware processors cause:
receiving an input data pertaining to a user, wherein the input data comprises a weight, a height, an age and demographic data of the user;
computing an optimal gaze angle, a current position of eyes of the user, a reaction speed of the eyes of the user, and a reaction speed of one or more hand movements based on one or more indicators displayed on one or more sensor boards positioned and configured in an environment;
computing a target calorie to be burnt by the user based on the weight, the height, the age and the demographic data;
calibrating the one or more objects for movements at a specific speed based on the optimal gaze angle, the current position of the eyes of the user, the reaction speed of the eyes of the user and the reaction speed of the one or more hand movements, and aligning the one or more calibrated objects with a defined goal;
computing a set of joint angle movements performed by the user for reaching the defined goal, by using an approximated inverse kinematics technique;
computing a set of tasks performed by the user based on a torque at each joint and joint angle movement amongst the first set of joint angle movements;
computing a set of rate of change of the set of tasks based on a Euclidean distance between (i) movement of the user between the one or more sensor boards and (ii) a time taken for change in a status associated with the user;
computing a frequency of change in the set of tasks performed by the user based on a number of tasks changed and time of one or more observations associated therein;
computing a set of metabolic equivalent of tasks based on the frequency of change in the set of tasks performed by the user;
computing a set of calories burnt by the user based on the first set of metabolic equivalent of tasks;
performing a comparison of the set of calories and the target calorie; and
adjusting speed of the one or more calibrated objects based on the comparison.

12. The one or more non-transitory machine readable information storage mediums as claimed in claim 11, wherein the one or more instructions which when executed by the one or more hardware processors further cause:
obtaining a baseline of an eye movement of the user by prompting the user to observe a pattern change of the one or more indicators associated on the one or more sensors;
computing, using the baseline of the eye movement of the user, an error rate based on (i) a number of incorrect movements performed by the user to reach the one or more sensor boards and (ii) a number of correct movements performed by the user to reach the one or more sensors boards; and
computing a current difficulty based on a previous difficulty and the error rate.

13. The one or more non-transitory machine readable information storage mediums as claimed in claim 12, wherein a message is transmitted to the one or more sensor boards for (i) a change in the one or more indicators and (ii) an observation to be made by the user for selection based on a prompt technique.

14. The one or more non-transitory machine readable information storage mediums as claimed in claim 11, wherein the one or more instructions which when executed by the one or more hardware processors further cause computing a pattern change in the one or more indicators based on the baseline of the eye movement of the user.

15. The one or more non-transitory machine readable information storage mediums as claimed in claim 11, wherein the one or more instructions which when executed by the one or more hardware processors further cause computing a subsequent set of tasks to be performed by the user for adjustment of the speed of the one or more calibrated objects.
